# EUROPÄISCHE PATENTANMELDUNG

(11) **EP 2 431 158 A1**
(43) Veröffentlichungstag der Anmeldung: **21.03.2012**
(21) Anmeldenummer: 10009661.9
(22) Anmeldetag: 16.09.2010
(51) Int. Cl.: B29C 69/00, B29C 47/02, F16L 9/133

(54) **Verfahren zur Herstellung thermisch isolierter Rohre, insbesondere Kupferrohre**

(71) Anmelder: MKM Mansfelder Kupfer und Messing GmbH, 06333 Hettstedt (DE)
(72) Erfinder: Flemming, Friedrich, 36151 Burghaun (DE); Eilhardt, Bernd, Chem.-Ing., 29690 Lindwedel (DE); Brauer, Karl-Heinz, Dipl.-Ing., 06343 Mansfeld OT Biesenrode (DE)
(74) Vertreter: Tragsdorf, Bodo

(57) **Zusammenfassung**

Die Erfindung betrifft ein Verfahren zur Herstellung thermisch isolierter Rohre, insbesondere Kupferrohre.

Ausgehend von den Nachteilen des bekannten Standes der Technik soll ein Verfahren geschaffen werden, mit dem sich vorgenannte Rohre effizient im kontinuierlichen Durchlauf herstellen lassen.

Hierzu wird ein Verfahren zum Ummanteln eines Kupferrohrs mit einem Isolierschaummaterial und das Aufbringen einer äußeren mechanischen Schutzschicht auf das Isolierschaummaterial vorgeschlagen, wobei
a) ein vorgefertigter Isollerschlauch aus einem elastischen, geschäumten Kunststoff oder Elastomer zugeführt und seitlich aufgeschlitzt wird, und ein zugeführtes Kupferrohr mit dem aufgeschlitzten Schlauch ummantelt wird, und anschließend
b) die Ummantelung in einem Extrusionsverfahren mit einer äußeren mechanischen Schutzschicht versehen wird.

Die Erfindung betrifft ferner ein entsprechend thermisch isoliertes Rohr und eine Anlage zur Herstellung eines derartigen Rohres.

## Beschreibung

Die vorliegende Erfindung betrifft ein Verfahren zur Herstellung thermisch isolierter Rohre, insbesondere Kupferrohre, ein thermisch isoliertes Kupferrohr, sowie eine Anlage zu deren Herstellung.

Derartige Rohre werden beispielsweise als medienführende Leitungen in Hausinstellationen, z.B. als Heizungsrohre, oder für die Kälte- oder Klimatechnik im industriellen Maßstab eingesetzt. Da die Innenrohre aus Kupfer gefertigt sind, muss das Rohr zur Umgebung hin thermisch isoliert werden. Hierzu werden Isolierschäume verwendet, die das Kupferrohr ummanteln und eine geringe Wärmeleitfähigkeit aufweisen.

Bekannt ist der Einsatz von thermisch isolierten Cu-Rohren mit einer Ummantelung aus geschäumtem Material, insbesondere auf Basis von PVC, PE oder PUR.

Bekannt ist die Herstellung ummantelter Kupferrohre, indem auf das Rohr eine Abstandshalterwendel aufgebracht wird und diese mit einer Außenhülle aus einem Kunststoffband versehen wird. Der Ringraum zwischen Rohr und Außenhülle wird zur Ausbildung der gewünschten Isolierung ausgeschäumt. Durch eine nachgeschaltete Kalibriervorrichtung wird das Rohr bis zur Beendigung des Aufschäumvorganges abgestützt. Ein derartiges Verfahren zur Herstellung eines Kupferrohres mit einer Schaumisolierung auf Basis PUR ist z.B. in der DE 32 42 074 C2 offenbart.

Aus der DE 35 30 187 A1 ist bekannt, dass zur Bildung der Dämm- bzw. Isolierschicht der Umschäumvorgang des Cu-Rohres in einem von einer Doppel-Formblockketten-Bandanlage gebildeten Hohlraum erfolgt. Auf die Isolierung wird mittels eines vakuumkalibrierten Ummantelungsextruders noch ein geschäumter Schutzmantel aufgebracht.

Der Nachteil der bekannten Verfahren besteht in einer aufwendigen Herstellung zur Ummantelung von Rohren mit einer Isolierung aus geschäumtem Material.

Aufgrund des mehrschichtigen Aufbaus ummantelter Rohre aus verschiedenen Materialien war es bisher nicht möglich, solche Rohrleitungen effizient herzustellen. Erwünscht ist insbesondere die Herstellung in einem kontinuierlichen Durchlaufverfahren.

Aufgabe der vorliegenden Erfindung ist daher die Schaffung eines Verfahrens, durch welche thermisch isolierte Rohrleitungen der vorstehend genannten Art sich effizient im kontinuierlichen Durchlauf herstellen lassen. Eine weitere Aufgabe besteht in der Schaffung einer entsprechenden thermisch isolierten Rohrleitung, die sich nach einem solchen Verfahren herstellen lässt, sowie in der Schaffung einer Anlage, die zur Durchführung eines solchen Verfahrens geeignet ist.

Diese Aufgaben werden erfindungsgemäß durch die Gegenstände der Ansprüche 1, 8 und 15 gelöst. Vorteilhafte Ausgestaltungen und Weiterbildungen sind Gegenstand der abhängigen Ansprüche.

Erfindungsgemäß wird zunächst ein vorgefertigter Isolierschlauch aus einem elastischen, geschäumten Kunststoff, vorzugsweise Polyethylen (PE), oder Elastomer, vorzugsweise Nitril-Butadien-Kautschuk (NBR) oder EPDM-Kautschuk (Ethylen-Propylen-Dien-Kautschuk), zugeführt und seitlich aufgeschlitzt. Zeitgleich wird ein Kupferrohr zugeführt und mit dem aufgeschlitzten Schlauch ummantelt.

Der vorgefertigte Isolierschlauch kann von einer Vorratsrolle abgewickelt und das Kupferrohr von einem Coil abgehaspelt werden.

Zur Ummantelung kann der Schlauch dem Kupferrohr während eines kontinuierlichen Durchlaufs durch eine entsprechende Bearbeitungsstation derart seitlich zugeführt werden, dass das Kupferrohr durch den Schlitz in den hohlen Kern des Schlauchs gleiten kann. Als Alternative kann der Schlauch auch seitlich auf das Cu-Rohr aufgeschoben bzw. aufgedrückt werden. Aufgrund der Eigenelastizität des Schlauchmaterials wird der Schlitz wieder geschlossen. Erforderlichenfalls kann der Schlitz auch durch Kleben oder Schweißen verschlossen werden. Das Rohr ist dann vollständig in das Isolierschaummaterial eingehüllt und somit gedämmt.

Anschließend wird die aus dem Kupferrohr und dem Schlauch gebildete Einheit in einem Extrusionsverfahren mit einer äußeren mechanischen Schutzschicht versehen. Bei dieser kann es sich insbesondere um eine Kunststoffschicht, vorzugsweise aus LDPE (Polyethylen niederer Dichte), handeln, die auf den Mantel des Schlauchs aufextrudiert wird. Auch dieser Extrusionsschritt geschieht im kontinuierlichen Durchlauf der Rohrleitung nach dem Schritt des Eindringens des Kupferrohrs in den Schlauch.

Vorzugsweise wird die auf den Schlauch aufgetragene Schutzschicht, also der äußere Mantel des isolierten Kupferrohres, nach dem Verlassen des Extruders noch geprägt. Der Vorteil dieser Prägung besteht in einer höheren Flexibilität des Außenmantels beim Aufwickeln der isolierten Kupferrohre als Coil.

Sämtliche vorstehend beschriebenen Verfahrensschritte können von stationären Einrichtungen durchgeführt werden, die von dem strangförmig vorliegenden Kupfer- und Schlauchmaterial durchlaufen werden. Damit lassen sich die erfindungsgemäßen Rohrleitungen mit hoher Produktivität herstellen. Die Ummantelung des Kupferrohres erfolgt in der Regel beim Hersteller der Kupferrohre. Verfahrenstechnisch ist es von Vorteil, dass bereits ein geschäumter Schlauch als Ausgangsmaterial vorliegt und kein Schäumprozess mehr erfolgen muss. Dadurch lassen sich auch wesentlich höhere Ausstoßleistungen erzielen. Es können Fertigungsgeschwindigkeiten von 10 bis 50 m/min erreicht werden.

Gemäß einer bevorzugten Ausführungsform der Erfindung werden das Kupferrohr und der Schlauch auf zusammenlaufenden Bahnen kontinuierlich einer Einführstation zugeführt, in der der Schaumstoffschlauch um das Kupferrohr gelegt wird, und der Schlauch wird auf seiner Bahn bis zur Einführstation oder innerhalb der Einführstation der Länge nach aufgeschlitzt.

Bei dieser Ausführungsform wird der Schlitz zur Aufnahme des Kupferrohrs erst kurz vor dem Einlaufen des Schlauchmaterials in die Einführstation eingebracht. Beispielsweise kann kurz vor einer Einrichtung, die den geschlitzten Schlauch seitlich um das Kupferrohr drückt, ein stationäres Messer angeordnet sein, das den Schlauch während des Einlaufens in die Einführstation aufschneidet.

Gemäß einer weiteren bevorzugten Ausführungsform wird der Schlitz des Schlauchs nach dem Einbringen des Kupferrohrs noch innerhalb der Einführstation oder in einer anschlie-βenden Klebe- oder Schweißstation verschweißt oder verklebt.

In diesem Fall wird vor dem Aufextrudieren der Schutzschicht der Schlitz des Schlauches wieder sicher verschlossen. Dies kann durch geeignete Schweiß- oder Klebemittel geschehen, die in der Einführstation unmittelbar hinter den Mitteln zum Einbringen des Kupferrohrs in den Schlauch angeordnet sind, oder aber in einer davon getrennt angeordneten Station stromabwärts der Einführstation.

Gemäß einer weiteren bevorzugten Ausführungsform wird das vom Schlauch ummantelte Kupferrohr kontinuierlich durch eine Extrusionsstation geführt, die mindestens einen Extrusionskopf zum Aufextrudieren der Schutzschicht auf die Mantelfläche des Schlauchs umfasst. Durch das Aufbringen einer äußeren Schutzschicht und deren Verfestigung wird der elastische Schlauch aus geschäumtem Material geringfügig zusammengedrückt, wodurch ein vollständiges Schließen des Schlitzes unterstützt wird.

Ein weiterer Aspekt der vorliegenden Erfindung betrifft eine thermisch isoliertes Rohr, bei welchem die Isolationsschicht durch einen Schlauch gebildet wird, der mit einem seitlichen Längsschlitz versehen ist, der durch die vorhandene Eigenelastizität des Schlauchmaterials oder erforderlichenfalls durch eine Schweiß- oder Klebenaht verschlossen ist, wobei die äußere mechanische Schutzschicht auf den Schlauch aufextrudiert ist. Bevorzugte Ausführungsformen dieser thermisch isolierten Rohre ergeben sich aus den Unteransprüchen 9 bis 14.

Bei den zu ummantelnden Kupferrohren kann es sich um weiche, halbharte oder harte Kupferrohre handeln, mit einem Außendurchmesser von 6 bis 35 mm und einer Wanddicke von 0,6 bis 2 mm. Die Wanddicke des Isolierschlauches sollte 5 bis 50 mm betragen. Der Innendurchmesser des Schlauches entspricht dem Außendurchmesser des Kupferrohres. Die Wanddicke des aufgetragenen Schutzmantels sollte 0,1 bis 1 mm betragen. Erforderlichenfalls kann der Schutzmantel an seiner Außenseite noch mit einer Prägung versehen werden.

Das Raumgewicht des vorgefertigten geschäumten Schlauches beträgt beispielsweise 30 bis 36 kg/m³. Die Wärmeleitfähigkeit sollte 0,03 bis 0,036 W/m K betragen. Der Isolierschlauch und der aufgetragene Schutzmantel sind vorzugsweise flammfest ausgerüstet (schwerentflammbar nach DIN 4102 B1).

Von Vorteil ist außerdem, dass gemäß der vorgeschlagenen Verfahrensweise der Isolierschlauch nicht fest mit der Mantelfläche des Kupferrohres verbunden ist, wie das der Fall ist, wenn der Schäumvorgang unmittelbar auf dem Rohr erfolgt. Erfindungsgemäß hergestelite ummantelte Kupferrohre lassen sich somit als Coil aufwickeln, ohne zu befürchten, dass auf der Ummantelung Risse entstehen.

Gemäß einem weiteren Aspekt der vorliegenden Erfindung umfasst eine Anlage zur Herstellung eines thermisch isolierten Rohrs gemäß der vorstehend beschriebenen Art Mittel zur kontinuierlichen Förderung eines Kupferrohrs und eines Schlauchs aus getrennten Vorräten entlang zusammenführender Fördereinrichtungen zu einer gemeinsamen Förderbahn, entlang welcher folgende Einrichtungen angeordnet sind:
- eine Einrichtung zum seitlichen Aufschlitzen des Schlauchs entlang seiner Länge,
- eine Einrichtung zum seitlichen Einbringen des Kupferrohrs durch den Schlitz des aufgeschlitzten Schlauchs oder zum Aufbringen des aufgeschlitzten Schlauches auf das Kupferrohr,
- gegebenenfalls eine Einrichtung zum Verschweißen oder Verkleben des Schlitzes des Schlauchs nach dem Einbringen des Kupferrohrs,
- und zumindest ein Extruder zum Aufextrudieren einer äußeren mechanischen Schutzschicht auf den Schlauch und
- eine Kühleinrichtung, die an der gemeinsamen Förderbahn in Abzugsrichtung nach dem Extruder angeordnet ist.

Die Erfindung wird nachstehend an einem Ausführungsbeispiel erläutert. In der zugehörigen Zeichnung zeigen:
- Fig. 1: den schematischen Aufbau einer Anlage zur Herstellung isolierter Kupferrohre und
- Fig. 2: einen schematischen Querschnitt durch eine thermisch isolierte Rohrleitung gemäß einer Ausführungsform der vorliegenden Erfindung.

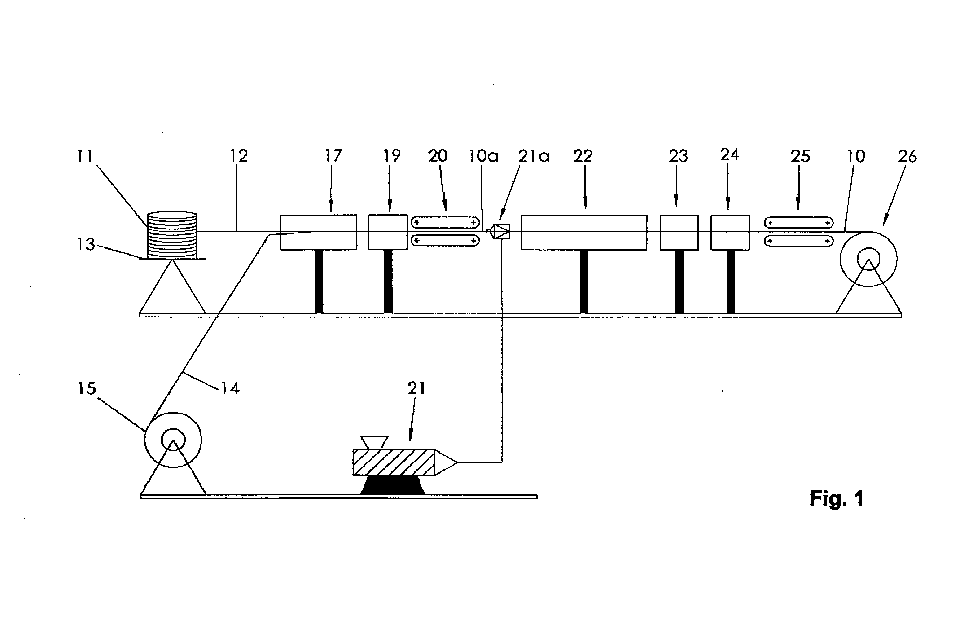

Die Herstellung eines isolierten Kupferrohres 10 in einem kontinuierlichen Durchlaufverfahren wird nachfolgend unter Bezugnahme auf die in Figur 1 gezeigte Anlage näher beschrieben.

Das zu ummantelnde blanke Kupferrohr 12 liegt als Coil 11 vor, das auf einem Auflagetisch 13 abgelegt ist. Der Schlauch 14 aus Nitril-Butadien-Kautschuk (NBR) ist auf einer Vorratsrolle 15 als Endlosmaterial aufgewickelt. Der Schaumstoffschlauch 14 besteht aus Zell- bzw. Moosgummi und ist noch nicht mit einem Schlitz versehen.

Das blanke Kupferrohr 12 und der Schlauch 14 werden von ihren jeweiligen Haspeln kontinuierlich abgespult und laufen kurz vor einer Einführstation 17 der Anlage zusammen. Der ankommende Schlauchstrang 14 wird innerhalb der Einführstation 17 von einem nicht näher gezeigten Messer seitlich in Längsrichtung aufgeschlitzt, unter Ausbildung eines Schlitzes 16. Durch diesen Schlitz 16 ist der hohle Innenraum des Schlauchs 14 von der Seite des Schlauchs 14 her in radialer Richtung zugänglich.

Nachdem der Schlauch 14 mit dem Schlitz 16 versehen worden ist werden Schlauch 14 und Kupferrohr 12 seitlich zusammengeführt, wobei durch eine speziell geformte Aufspreizvorrichtung innerhalb der Einführstation 17 der Schlitz 16 soweit auseinandergedrückt wird, dass der Schlauch 14 kontinuierlich auf das Kupferrohr 12 aufgeschoben werden kann. Dies ist möglich, da der aus NBR bestehende Schlauch 14 eine ausreichende Elastizität besitzt. Der aufgeschlitzte Schlauchmantel 14 wird durch den anliegenden Druck kontinuierlich auf das Kupferrohr 12 aufgeschoben. Aufgrund der vorhandenen Elastizität des Schlauchmantels 14 wird der Schlitz 16 wieder selbsttätig geschlossen und das Kupferrohr 12 wird somit kontinuierlich, vollflächig ummantelt.

Der Innendurchmesser des Schlauches 14 ist so an den Außendurchmesser des Kupferrohres 12 angepasst, dass ein sicherer und fester Sitz des Schlauches 14 auf dem Kupferrohr 12 gewährleistet wird.

Die Einführstation 17, in der das Einbringen des Kupferrohrs 12 in den Schlauch 14 stattfindet, kann entsprechende Einrichtungen umfassen, die dieses Einbringen erleichtern, wie etwa Mittel zum Aufspreizen und Verbreitern des Schlitzes 16. Es ist ferner im Rahmen der vorliegenden Erfindung nicht erforderlich, dass die Einrichtungen zum seitlichen Aufschlitzen des Schlauchs 14 entlang seiner Länge innerhalb der Einführstation angeordnet sind. Diese können auch entlang der Bahn des Schlauchs 14 von seiner Ablaufhaspel bis zur Einführstation 17 angeordnet sein. Es liegt im Rahmen fachmännischen Handelns, hierfür eine zweckmäßige Anordnung zu wählen.

Das mit dem Schaumstoffschlauch ummantelte Rohr 10a wird anschließend weiter behandelt. Sollte nach dem Einbringen des Kupferrohrs 12 in den Schlauch 14 ein Verkleben oder Verschweißen des Schlitzes 16 erforderlich sein, so können innerhalb oder au-βerhalb der Einführstation 17, nach dem Ummanteln des Kupferrohrs, in Abzugsrichtung Einrichtungen zum Verkleben oder Verschweißen des Schlitzes 16 vorgesehen sein.

In der Figur 1 ist hierzu eine nachgeschaltete Kleb- oder Schweißeinheit 19 dargestellt. Nach dieser ist eine erste Abzugsraupe 20 angeordnet, deren umlaufende Backen mit dem ummantelten Kupferrohr 10a in Berührungskontakt stehen. Über die Abzugsraupe 20 wird die erforderliche Abzugsgeschwindigkeit eingestellt. Nach der Abzugsraupe 20 ist ein Extruder 21 mit einem Quer- oder Schrägspritzkopf 21 a angeordnet. Das ummantelte Kupferrohr 10a wird zentrisch durch den Querspritzkopf 21a geführt und dabei wird auf die Ummantelung eine dünnwandige Schutzschicht 18 aus LDPE aufgetragen.

Falls es erforderlich sein sollte, die Schutzschicht mehrfarbig auszuführen, so müssen innerhalb der Produktionslinie noch weitere Extruder installiert werden.

Vor dem nachfolgenden Abkühlvorgang kann auf die Schutzschicht noch eine Prägung aufgebracht werden, um beim späteren Aufwickeln der isolierten Rohre zu verhindern, dass, insbesondere bei kleinen Wickelradien, Risse in der Schutzschicht entstehen. Durch die Prägung wird eine deutlich verbesserte Flexibilität der äußeren Schutzschicht erreicht, sodass die volle Funktionsfähigkeit der Schutzschicht nach dem Auf- oder Abwickeln erhalten bleibt.

In an sich bekannter Weise ist dem Extruder 21 eine Kühleinrichtung 22 nachgeschalten, in der der aufgetragene Schutzmantel 18 bis auf Umgebungstemperatur abgekühlt wird. Während des Abkühlvorganges verfestigt sich der LDPE-Schutzmantel 18 und erreicht somit die gewünschte mechanische Stabilität/Festigkeit.

In Abzugsrichtung hinter der Kühleinrichtung 22 können noch weitere Behandlungseinrichtungen vorgesehen sein, wie z.B. eine Bedruckungseinrichtung 23 zum Aufdruck einer Kennzeichnung und eine Ablängeinrichtung 24. Hinter dieser ist noch eine zweite Abzugsraupe 25 angeordnet. Das die Abzugsraupe 25 verlassende endlose isolierte Kupferrohr 10 mit Schutzmantel 18 wird abschließend in einer Aufwickelstation 26 gemäß der gewünschten Lieferlänge zu einem Coil aufgehaspelt.

Wahlweise kann auch ein Ablagetisch für fertige Kupferrohre 10 vorgesehen sein, wobei das endlose Rohr 10 zu Einzelrohren vorgegebener Länge abgelängt wurde.

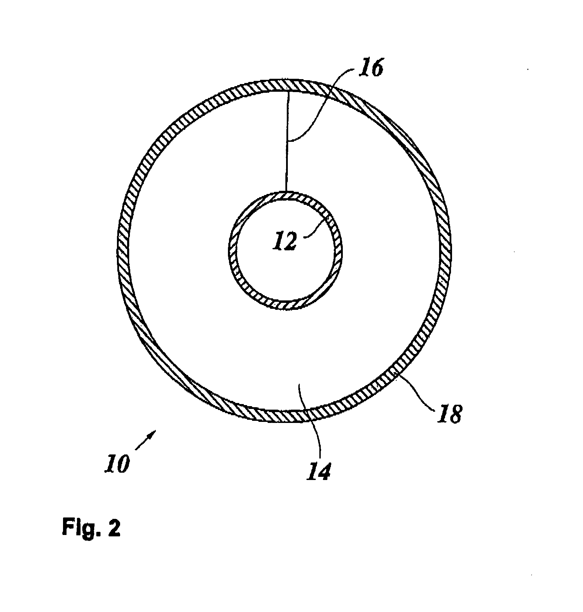

Das thermisch isolierte Rohr 10, das in der Fig. 2 im Querschnitt vergrößert dargestellt ist, dient zur Leitung einer Flüssigkeit, die eine Temperaturdifferenz zur Umgebung der Rohrleitung 10 aufweist. Beispielsweise kann das Rohr 10 als Heizungsrohrleitung eingesetzt werden, in der heißes Wasser zirkuliert. Das isolierte Rohr 10 ist jedoch auch zur Leitung einer kalten Flüssigkeit, eines kalten Gases oder dergleichen geeignet.

Das zu leitende Fluid wird innerhalb eines Kupferrohrs 12 mit kreisförmigem Querschnitt geführt. Üblich sind beispielsweise Kupferrohre mit einem Außendurchmesser zwischen 5 und 35 mm und einer Wanddicke zwischen 0,4 und 2,5 mm. Die vorstehend genannten Abmessungen sind jedoch nicht als beschränkend für den Gegenstand der vorliegenden Erfindung zu verstehen, sondern können vom Fachmann nach Belieben abgewandelt werden.

Aufgrund der hohen Wärmeleitfähigkeit von Kupfer muss das Kupferrohr 12 auf seiner Außenseite thermisch isoliert werden, um die gewünschte Temperaturdifferenz zwischen dem innerhalb des Kupferrohrs 12 geleiteten Fluid und der Umgebung aufrecht zu erhalten. Hierzu dient im vorliegenden Fall ein Schlauch 14 aus einem Isolierschaummaterial. Bei diesem Material handelt es sich um aufgeblähten Nitril-Butadien-Kautschuk mit einem Raumgewicht von 30 bis 36 kg/m³ und einer Wärmeleitfähigkeit von 0,030 bis 0,036 W/m. Der Schlauch 14 weist eine wesentlich höhere Wanddicke auf als das Kupferrohr 12, in der Regel je nach gewünschtem Grad der thermischen Isolierung zwischen 5 und 100 mm.

Zum Einbringen des Kupferrohrs 12 in den Schlauch 14 ist letzterer mit einem Längsschlitz 16 versehen, der sich im Querschnitt durch die gesamte Dicke der Wand des Schlauchs 14 erstreckt. Wie bereits näher erläutert, kann das Kupferrohr 12 radial seitlich oder auch von oben in den hohlen Kern des Schlauchs 14 eingebracht werden. Der Schlauch 14, der eine gewisse Elastizität aufweist, wird hierbei in seiner Umfangsrichtung auseinandergedrückt, so dass sich der Schlitz 16 öffnet und das Kupferrohr 12 in den Schlauch 14 hineingleiten kann. Die Elastizität des Schlauchs 14 sorgt dafür, dass sich der Schlitz 16 nach der Aufnahme des Kupferrohres wieder schließt. Anschließend wird der Schlitz 16 der Länge nach verschweißt oder verklebt, falls die Elastizität des Schlauches nicht ausreicht, um den Schlitz 16 selbsttätig zu verschließen. Eine entsprechende Schweiß- oder Klebenaht ist in der Fig. 2 nicht näher dargestellt.

Schließlich wird der Schlauch 14 auf seiner Außenseite mit einer äußeren mechanischen Schutzschicht 18 versehen. Diese äußere Schutzschicht besteht aus LD-Polyethylen mit einer Schichtdicke von 0,1 bis 0,5 mm. Das Aufbringen dieser Schutzschicht 18 geschieht in einem Extrusionsverfahren, in welchem der Schlauch 14, der bereits das Kupferrohr 12 enthält und dessen Schlitz 16 wieder verschlossen ist, eine entsprechende Extrusionsstation zum Aufbringen der äußeren mechanischen Schutzschicht 18 passiert.

Sowohl der Schlauch 14 als auch die äußere mechanische Schutzschicht 18 bestehen aus einem schwer entflammbaren Material gemäß der Norm DIN 4102 B1.

## Patentansprüche

1. Verfahren zur Herstellung eines thermisch isolierten Rohres (10), umfassend das Ummanteln eines Kupferrohrs (12) mit einem Isolierschaummaterial und das Aufbringen einer äußeren mechanischen Schutzschicht (18) auf das Isollerschaummaterial, **dadurch gekennzeichnet, dass** in einem kontinuierlichen Durchlaufverfahren
a) ein vorgefertigter Isolierschlauch (14) aus einem elastischen, geschäumten Kunststoff oder Elastomer zugeführt und seitlich aufgeschlitzt wird, und ein zugeführtes Kupferrohr (12) mit dem aufgeschlitzten Schlauch (14) ummantelt wird, und anschließend
b) die Ummantelung (14) in einem Extrusionsverfahren mit einer äußeren mechanischen Schutzschicht (18) versehen wird.

2. Verfahren nach Anspruch 1, **dadurch gekennzeichnet, dass** in Schritt a) das Kupferrohr (12) und der Schlauch (14) auf zusammenlaufenden Bahnen kontinuierlich einer Einführstation zugeführt werden, in der der Schlauch (14) auf seiner Bahn bis zur Einführstation oder innerhalb der Einführstation der Länge nach aufgeschlitzt wird und der Schlauch (14) um das Kupferrohr (12) gelegt oder das Kupferrohr (12) in den seitlich aufgeschlitzten Schlauch (14) eingebracht wird.

3. Verfahren nach einem der Ansprüche 1 oder 2, **dadurch gekennzeichnet, dass** der Schlitz (16) des Schlauchs (14) nach dem Einbringen des Kupferrohrs (12) noch innerhalb der Einführstation oder in einer anschließenden Klebe- oder Schweißstation verschweißt oder verklebt wird.

4. Verfahren nach einem der Ansprüche 1 bis 3, **dadurch gekennzeichnet, dass** in Schritt b) das von dem Schlauch (14) ummantelte Kupferrohr (12) kontinuierlich durch eine Extrusionsstation geführt wird, die mindestens einen Extrusionskopf zum Aufextrudieren der Schutzschicht (18) auf die Mantelfläche des Schlauchs (14) umfasst und gegebenenfalls vor der Kühleinrichtung (22) das isolierte Kupferrohr (10) noch Prägeeinrichtung durchläuft, um auf die Schutzschicht (18) eine Prägung aufzubringen.

5. Verfahren nach einem der Ansprüche 1 bis 4, **dadurch gekennzeichnet, dass** der vorgefertigte Isolierschlauch (14) aus Polyethylen, Nitril-Butadien-Kautschuk oder EPDM-Kautschuk besteht.

6. Verfahren nach einem der Ansprüche 1 bis 5, **dadurch gekennzeichnet, dass** die Wanddicke des Isolierschlauches (14) 5 bis 50 mm beträgt.

7. Verfahren nach einem der Ansprüche 1 bis 6, **dadurch gekennzeichnet, dass** die mechanische Schutzschicht (18) aus LDPE besteht und eine Dicke von 0,1 bis 1 mm aufweist.

8. Thermisch isoliertes Rohr (10), umfassend
- ein inneres Kupferrohr (12),
- eine thermische Isolationsschicht aus einem Isolierschaummaterial, die das Kupferrohr (12) umhüllt,
- und eine äußere mechanische Schutzschicht (18),
**dadurch gekennzeichnet, dass** die Isolationsschicht durch einen elastischen Schlauch (14) gebildet wird, der mit einem seitlichen Längsschlitz (16) versehen ist, der durch die Eigenelastizität des Schlauchmaterials oder durch eine Schweiß- oder Klebenaht verschlossen ist und dass die äußere mechanische Schutzschicht (18) auf den Schlauch (14) aufextrudiert ist.

9. Rohr nach Anspruch 8, **dadurch gekennzeichnet, dass** der Schlauch (14) aus Polyethylen, Nitril-Butadien-Kautschuk oder EPDM-Kautschuk besteht.

10. Rohr nach einem der Ansprüche 8 oder 9, **dadurch gekennzeichnet, dass** das Material des Schlauchs (14) ein Raumgewicht von 30 bis 36 kg/m³ aufweist.

11. Rohr nach einem der Ansprüche 8 bis 10, **dadurch gekennzeichnet, dass** das Material des Schlauchs (14) eine Wärmeleitfähigkeit von 0,030 bis 0,036 W/m K aufweist.

12. Rohr nach einem der Ansprüche 8 bis 11, **dadurch gekennzeichnet, dass** die äußere mechanische Schutzschicht (18) aus LD-Polyethylen besteht, die vorzugsweise mit einer Prägung versehen ist.

13. Rohr nach einem der Ansprüche 8 bis 12, **dadurch gekennzeichnet, dass** die äußere mechanische Schutzschicht (18) eine Schichtdicke von 0,1 bis 1 mm aufweist.

14. Rohr nach einem der Ansprüche 8 bis 13, **dadurch gekennzeichnet, dass** die äußere mechanische Schutzschicht (18) und/oder der Schlauch (14) aus einem schwer entflammbaren Material bestehen.

15. Anlage zur Herstellung eines thermisch isolierten Rohres (10) nach einem der Ansprüche 8 bis 14, **gekennzeichnet durch** Mittel zur kontinuierlichen Förderung eines Kupferrohrs (12) und eines Schlauchs (14) aus getrennten Vorräten entlang zusammenführender Fördereinrichtungen zu einer gemeinsamen Förderbahn, entlang welcher mindestens folgende Einrichtungen angeordnet sind:
- eine Einrichtung zum seitlichen Aufschlitzen des Schlauchs (14) entlang seiner Länge,
- eine Einrichtung zum seitlichen Einbringen des Kupferrohrs (12) **durch** den Schlitz (16) des aufgeschlitzten Schlauchs (14) oder zum Aufbringen des aufgeschlitzten Schlauches (14) auf das Kupferrohr (12),
- mindestens einen Extruder (21, 21 a) zum Aufbringen einer äußeren mechanischen Schutzschicht (18) auf den Schlauch (14) und
- einer Kühleinrichtung (22), die an der gemeinsamen Förderbahn in Abzugsrichtung nach dem Extruder (21, 21 a) angeordnet ist.
